# EUROPEAN PATENT SPECIFICATION

(11) **EP 3 455 770 B1**
(45) Date of publication and mention of the grant of the patent: **29.05.2024**
(21) Application number: 17718678.0
(22) Date of filing: 05.04.2017
(51) Int. Cl.: G06F 21/50

(54) **SYSTEMS AND METHODS FOR DETERMINING SECURITY RISK PROFILES**
SYSTEME UND VERFAHREN ZUR BESTIMMUNG VON SICHERHEITSRISIKOPROFILEN
SYSTÈMES ET PROCÉDÉS DESTINÉS À DÉTERMINER DES PROFILS DE RISQUE DE SÉCURITÉ

(30) Priority: 11.05.2016 US 201615151734
(43) Date of publication of application: 20.03.2019
(73) Proprietor: CA, Inc., San Jose, CA 95131 (US)
(72) Inventor: RANJAN, Gyan, Santa Clara, California 95051 (US)
(74) Representative: Dilg, Haeusler, Schindelmann Patentanwaltsgesellschaft mbH
(86) International application number: PCT/US2017/026181
(87) International publication number: WO 2017/196463

(56) References cited:
- WO-A1-2016/065049
- US-A1- 2013 073 346
- US-A1- 2014 058 913
- US-A1- 2016 110 819
- US-A1- 2021 029 108
- US-B2- 9 276 939

## Description

### BACKGROUND

In evaluating the security risk associated with an individual or organization, security risk profiles may be constructed to determine the potential for attacks. Traditionally, risk is dependent on the feasibility of a successful attack based on the security of an entity. For example, when calculating insurance costs, organizations may be evaluated based on the security measures used to prevent attacks. An organization that employs network firewalls may be less susceptible to attack than a second organization that, does not employ firewalls, and the risk would therefore be lower for the first organization.

However, although an entity may be susceptible to attack, an attacker may not have enough incentive to attempt to breach the entity's security measures. In the above example, although the second organization does not employ firewalls, it may be a small organization with very little useful data for attackers to exploit. Meanwhile, if the first organization has valuable information, attackers may attempt to breach the organization despite any security measures. Furthermore, in some cases, information about security measures may not be fully available for analysis. For example, an organization may only publicly disclose some of its security measures in order to prevent attackers from being able to prepare for all of its security measures. In these cases, security risk profiles based on an evaluation of an organization or entity's deployed security maybe incomplete. Therefore, a better method of evaluating security risk is needed in order to fully capture the potential of being attacked. Accordingly, the instant disclosure identifies and addresses a need for additional and improved systems and methods for determining security risk profiles.

US 2016/0110819 A1 relates to determination one or more cyber insurance policies, products and/or ratings based on processing of real-time information related to cyber attacks on one or more of computing assets that are coupled to a computer network. Disclosed is a set of operations that can be carried out to determine insurability rating for a product or a service in accordance with an exemplary embodiment. The operations can be implemented using a computing system with network connectivity. Such a computing system includes a processor (e.g., a hardware implemented processor comprising electronic circuitry), memory, physical buses and interfaces that allows different components of the system to communicate with one another and with other devices that are connected to the computing device through a network. Real-time data indicative of cyber attacks that are likely to diminish a value of the product or service is received at a processor that is implemented at least in-part by electronic circuitry and coupled to a computer network. The real-time data is processed to compute a real-time damage assessment associated with losses to the product or service in the event of one or more cyber attacks. The real-time damage assessment can be computed using at least a likelihood of occurrence of the one or more cyber attacks, a likelihood of success of the one or more cyber attacks, and a measure of severity of damage to the product of service as a result of the occurrence of the one or more cyber attacks. For example, a higher likelihood of cyber attack, a higher likelihood of the success of the cyber attack, and a higher severity measure of damage caused by such cyber attacks, each contribute to a higher computed real-time damage assessment. An insurability rating for the product or service is determined. Such an insurability rating can be used to determine an amount of insurance that sufficiently insures against the occurrence of the one or more cyber attacks. The insurability rating is determined at least in-part based on the real-time damage assessment and is changeable in response to changes in the received real-time data.

### SUMMARY

As will be described in greater detail below, the instant disclosure generally relates to systems and methods for determining security risk profiles by evaluating the incentive an attacker may have to attack an entity. For example, the disclosed systems may compare similar organizations or individuals to determine which ones provide attackers with a greater incentive. By mapping similar or connected entities in a graph structure, these systems may more accurately compare risks associated with individual entities. Furthermore, by using such a structure to compare entities, these systems may reevaluate the security risk of an entity when a similar entity is attacked.

According to a first aspect of the invention, a computer-implemented method for determining security risk profiles includes (1) detecting a security breach of an entity within a set of entities, (2) constructing a peer-similarity graph that identifies an incentive to attack the entity in comparison to other entities within the set of entities, (3) creating, using the peer-similarity graph, a security risk profile for each entity in the set of entities, (4) automatically adjusting at least one security risk for the entity and another entity, based on the detected security breach, and (5) updating a security database with the adjusted security risk profile.

In some embodiments, detecting the security breach may include detecting unauthorized access to the entity. Additionally or alternatively, detecting the security breach may include receiving an alert from the entity. In further embodiments, detecting the security breach may include identifying a security report indicating the security breach.

Also according to the first aspect of the invention, constructing the peer-similarity graph includes creating a node for each entity in the set of entities, creating an undirected edge between each pair of similar entities, and creating a directed edge between each pair of entities in a provider-client relationship. Also according to the first aspect of the invention, creating the node includes determining a size of the node by evaluating the incentive to attack the entity and adjusting the size of the node based on entities connected by edges. Additionally, in these examples, evaluating the incentive to attack the entity may include identifying a market of the entity, a size of the entity, a value of the entity, a number of clients of the entity, a type of data stored by the entity, a security measure used by the entity, and/or a reputation of the entity. Furthermore, in these examples, adjusting the size of the node may include calculating an average node size of similar entities, weighting the size of the node based on an aggregate node size of provider entities, and/or weighting the size of the node based on an aggregate node size of client entities.

In one embodiment, creating the security risk profile may include calculating a risk score based on the peer-similarity graph and weighting the risk score with historical risk data of the entity and similar entities. Additionally, in this embodiment, adjusting the security risk profile may include adjusting the risk score of the breached entity, adjusting the risk score of a related entity, and/or adding the security breach to the historical risk data.

In one example, the computer-implemented method may further include generating a risk evaluation report of the entity using the security database. In this example, the risk evaluation report may include a record of security breaches, the security risk profile of the entity, and/or an evaluation of risk of similar entities.

In some examples, the computer-implemented method may further include determining that the security risk profile indicates a high security threat to the entity and, in response, performing a security action to mitigate the threat. In these examples, the security action may include alerting an administrator of the security breach, flagging the entity as a high risk, and/or sending a security report to the entity.

According to a second aspect of the invention, a system for implementing the above-described method includes (1) a detection module, stored in memory, that detects a security breach of an entity within a set of entities, (2) a construction module, stored in memory, that constructs a peer-similarity graph that identifies an incentive to attack the entity in comparison to other entities within the set of entities, (3) a creation module, stored in memory, that creates, using the peer-similarity graph, a security risk profile for each entity in the set of entities, (4) an adjustment module, stored in memory, that automatically adjusts at least one security risk profile for at least the entity and a related entity, based on the detected security breach, and (5) an update module, stored in memory, that updates a security database with the adjusted security risk profile. Other essential features of the second aspect are specified in claim 11. In addition, the system may include at least one processor that executes the detection module, the construction module, the creation module, the adjustment module, and the update module.

According to third aspect of the invention, the above-described method is encoded as computer-readable instructions on a non-transitory computer-readable medium. The essential features of the third aspect of the invention are specified in claim 13.

Features from any of the above-mentioned embodiments may be used in combination with one another in accordance with the general principles described herein. These and other embodiments, features, and advantages will be more fully understood upon reading the following detailed description in conjunction with the accompanying drawings and claims.

### BRIEF DESCRIPTION OF THE DRAWINGS

The accompanying drawings illustrate a number of representative embodiments and are a part of the specification. Together with the following description, these drawings demonstrate and explain various principles of the instant disclosure.
FIG. 1 is a block diagram of a representative system for determining security risk profiles.
FIG. 2 is a block diagram of an additional representative system for determining security risk profiles.
FIG. 3 is a flow diagram of a representative method for determining security risk profiles.
FIG. 4 is a block diagram of a representative peer-similarity graph comparing a multitude of representative entities.
FIG. 5 is a block diagram of a representative computing system capable of implementing one or more of the embodiments described and/or illustrated herein.
FIG. 6 is a block diagram of a representative computing network capable of implementing one or more of the embodiments described and/or illustrated herein.

Throughout the drawings, identical reference characters and descriptions indicate similar, but not necessarily identical, elements. While the representative embodiments described herein are susceptible to various modifications and alternative forms, specific embodiments have been shown by way of example in the drawings and will be described in detail herein. However, the representative embodiments described herein are not intended to be limited to the particular forms disclosed. Rather, the instant disclosure covers all modifications, equivalents, and alternatives falling within the scope of the appended claims.

### DETAILED DESCRIPTION OF REPRESENTATIVE EMBODIMENTS

The present disclosure is generally directed to systems and methods for determining security risk profiles. As will be explained in greater detail below, by creating a peer-similarity graph to assess various entities in relation to each other, the systems and methods disclosed herein may construct security risk profiles using contextual information beyond the security measures used by the entities. For example, by comparing relative size or brand reputation, the disclosed systems and methods may determine comparative incentive for attackers to breach security systems for different organizations. The disclosed systems and methods may then adjust security profiles based not only on attacks to an entity but on attacks to related entities as well.

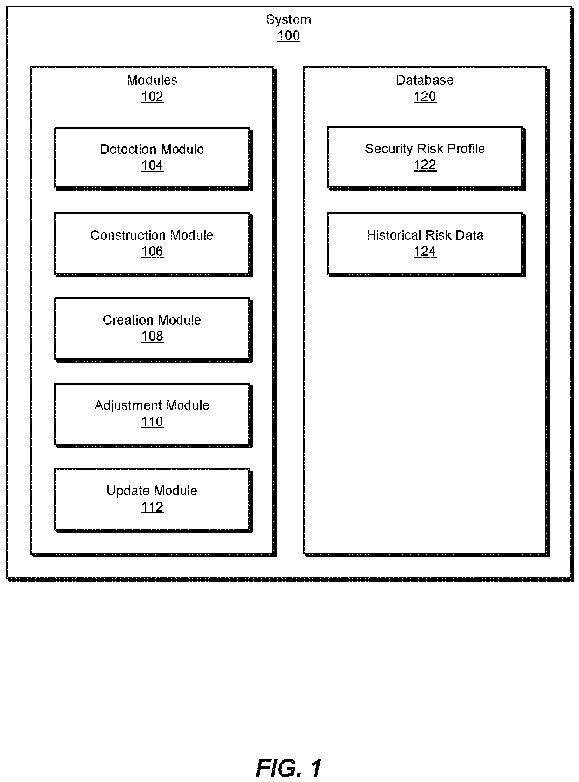

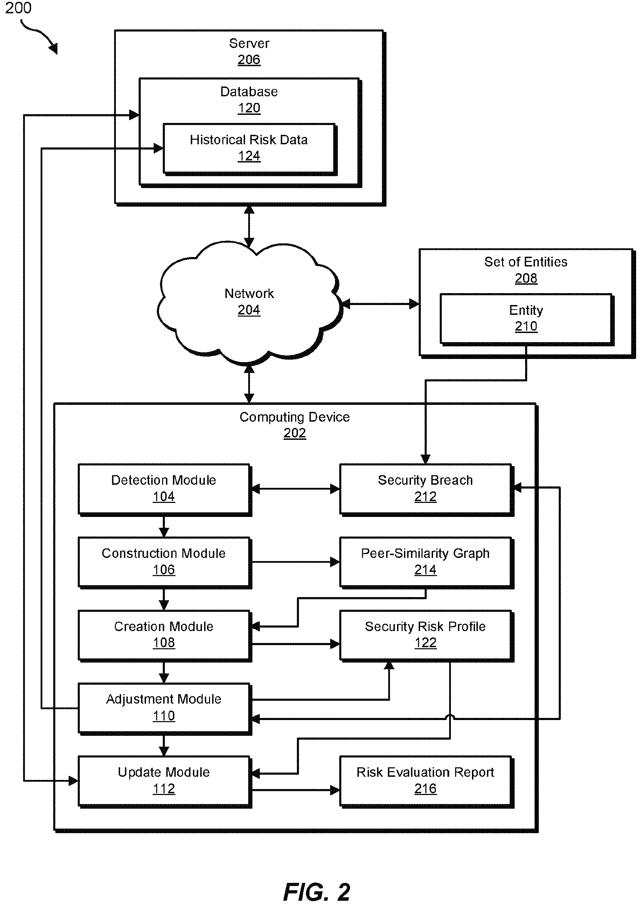

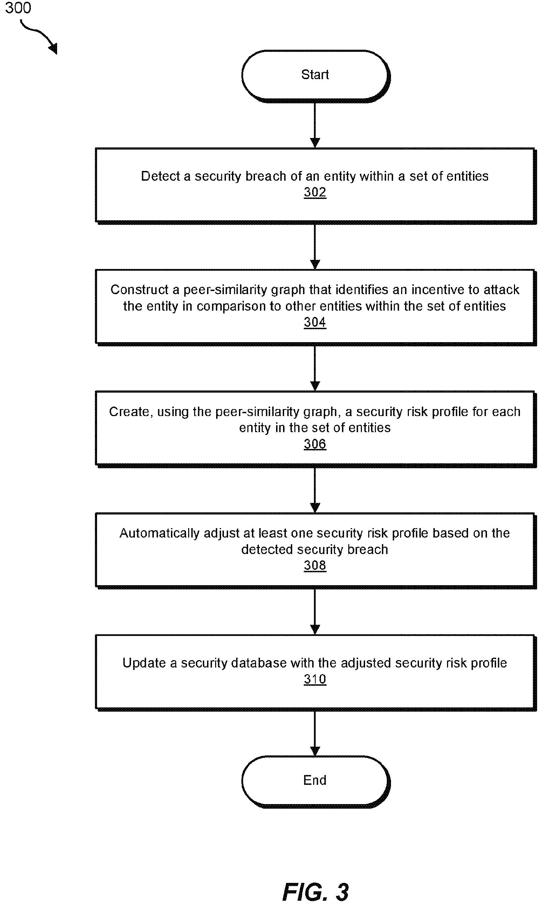

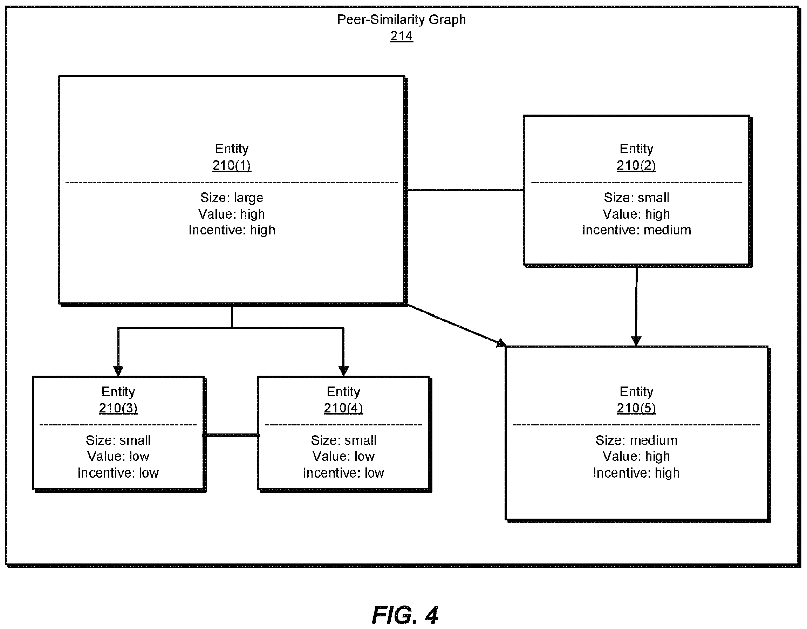

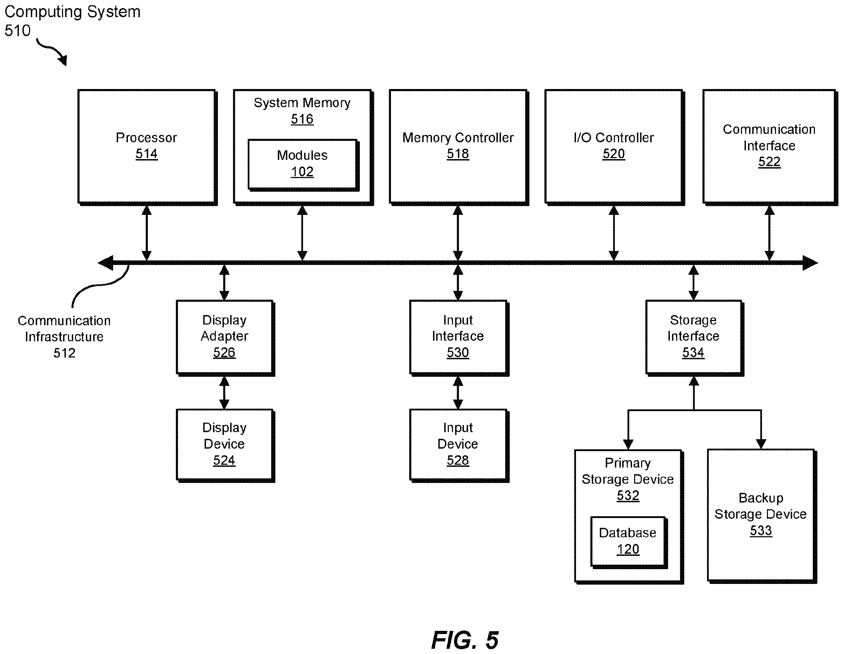

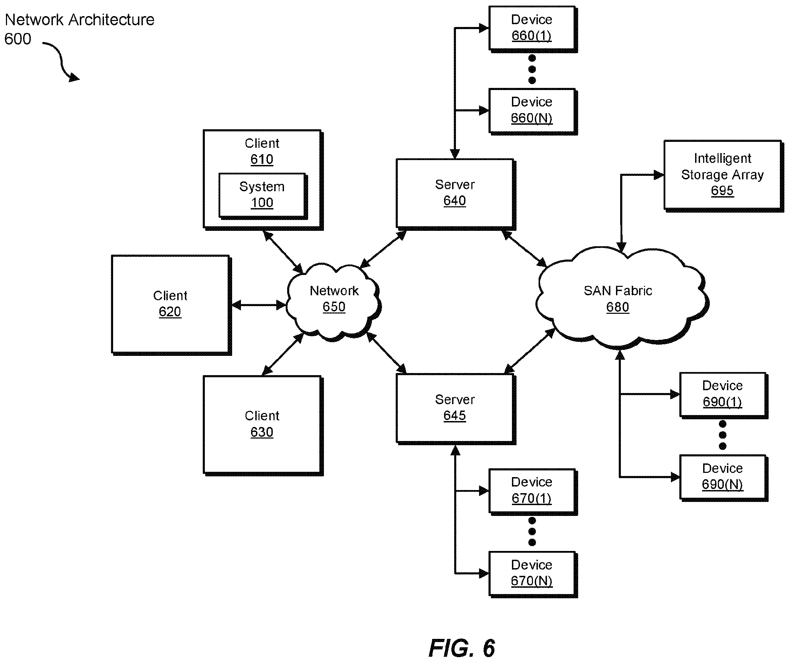

The following will provide, with reference to FIGS. 1 and 2, detailed descriptions of representative systems for determining security risk profiles. Detailed descriptions of corresponding computer-implemented methods will also be provided in connection with FIG. 3. In addition, detailed descriptions of a representative peer-similarity graph comparing a multitude of representative entities will be provided in connection with FIG. 4. Furthermore, detailed descriptions of a representative computing system and network architecture capable of implementing one or more of the embodiments described herein will be provided in connection with FIGS. 5 and 6, respectively.

FIG. 1 is a block diagram of representative system 100 for determining security risk profiles. As illustrated in this figure, representative system 100 may include one or more modules 102 for performing one or more tasks. For example, and as will be explained in greater detail below, representative system 100 may include a detection module 104 that detects a security breach of an entity within a set of entities. The term "entity," as used herein, generally refers to a distinct individual or group, such as a company, that may be analyzed for security risk purposes.

Representative system 100 may additionally include a construction module 106 that constructs a peer-similarity graph that identifies an incentive to attack the entity in comparison to other entities within the set of entities. The term "peer-similarity graph," as used herein, generally refers to a graph or diagram that shows the relationship between multiple peer entities. Representative system 100 may also include a creation module 108 that creates, using the peer-similarity graph, a security risk profile for each entity in the set of entities. As used herein, the term "security risk profile" generally refers to a set of information describing and/or analyzing the potential threats and likelihood of attacks to an entity's security.

Furthermore, representative system 100 may include an adjustment module 110 that automatically adjusts at least one security risk profile based on the detected security breach. Representative system 100 may additionally include an update module 112 that updates a security database with the adjusted security risk profile. Although illustrated as separate elements, one or more of modules 102 in FIG. 1 may represent portions of a single module or application.

In certain embodiments, one or more of modules 102 in FIG. 1 may represent one or more software applications or programs that, when executed by a computing device, may cause the computing device to perform one or more tasks. For example, and as will be described in greater detail below, one or more of modules 102 may represent software modules stored and configured to run on one or more computing devices, such as the devices illustrated in FIG. 2 (e.g., computing device 202 and/or server 206), computing system 510 in FIG. 5, and/or portions of representative network architecture 600 in FIG. 6. One or more of modules 102 in FIG. 1 may also represent all or portions of one or more special-purpose computers configured to perform one or more tasks.

As illustrated in FIG. 1, representative system 100 may also include one or more databases, such as database 120. In one example, database 120 may be configured to store a security risk profile 122, which may include an analysis of security threats to an entity. Database 120 may also be configured to store historical risk data 124, which may include information about past security breaches and attempted attacks.

Database 120 may represent portions of a single database or computing device or a plurality of databases or computing devices. For example, database 120 may represent a portion of server 206 in FIG. 2, computing system 510 in FIG. 5, and/or portions of representative network architecture 600 in FIG. 6. Alternatively, database 120 in FIG. 1 may represent one or more physically separate devices capable of being accessed by a computing device, such as server 206 in FIG. 2, computing system 510 in FIG. 5, and/or portions of representative network architecture 600 in FIG. 6.

Representative system 100 in FIG. 1 may be implemented in a variety of ways. For example, all or a portion of system 100 may represent portions of representative system 200 in FIG. 2. As shown in FIG. 2, system 200 may include a computing device 202 in communication with a server 206 via a network 204. In one example, computing device 202 may be programmed with one or more of modules 102 and/or may store all or a portion of the data in database 120. Additionally or alternatively, server 206 may be programmed with one or more of modules 102 and/or may store all or a portion of the data in database 120. Similarly, both server 206 and computing device 202 may be merged into a single machine or computing system.

In one embodiment, one or more of modules 102 from FIG. 1 may, when executed by at least one processor of computing device 202 and/or server 206, enable computing device 202 and/or server 206 to evaluate security risk based on the incentive to attack an entity. For example, and as will be described in greater detail below, detection module 104 may detect a security breach 212 of an entity 210 within a set of entities 208. Construction module 106 may construct a peer-similarity graph 214 that identifies an incentive to attack entity 210 in comparison to other entities within set of entities 208. Creation module 108 may create, using peer-similarity graph 214, security risk profile 122 for each entity in set of entities 208. Adjustment module 110 may then adjust security risk profile 122 based on detected security breach 212. Additionally, update module 112 may update a security database 120 with adjusted security risk profile 122.

In the example of FIG. 2, and as will be explained in greater detail below, computing device 202 may first detect security breach 212 of entity 210 via network 204. Computing device 202 may then compare entity 210 with other entities in set of entities 208 to create peer-similarity graph 214. Next, computing device 202 may construct security risk profile 122 for entity 210 based on peer-similarity graph 214. Computing device 202 may then use security breach 212 to modify security risk profile 122 and update historical risk data 124 in database 120 on server 206. Furthermore, computing device 202 may add security risk profile 122 to database 120. Finally, computing device 202 may generate a risk evaluation report 216 for entity 210 using information from database 120.

Computing device 202 generally represents any type or form of computing device capable of reading computer-executable instructions. Examples of computing device 202 include, without limitation, laptops, tablets, desktops, servers, cellular phones, Personal Digital Assistants (PDAs), multimedia players, embedded systems, wearable devices (e.g., smart watches, smart glasses, etc.), gaming consoles, combinations of one or more of the same, representative computing system 510 in FIG. 5, or any other suitable computing device.

Server 206 generally represents any type or form of computing device that is capable of storing and/or managing information about security risk. Examples of server 206 include, without limitation, application servers and database servers configured to provide various database services and/or run certain software applications.

Network 204 generally represents any medium or architecture capable of facilitating communication or data transfer. Examples of network 204 include, without limitation, an intranet, a Wide Area Network (WAN), a Local Area Network (LAN), a Personal Area Network (PAN), the Internet, Power Line Communications (PLC), a cellular network (e.g., a Global System for Mobile Communications (GSM) network), representative network architecture 600 in FIG. 6, or the like. Network 204 may facilitate communication or data transfer using wireless or wired connections. In one embodiment, network 204 may facilitate communication between computing device 202 and server 206.

FIG. 3 is a flow diagram of a representative computer-implemented method 300 for determining security risk profiles. The steps shown in FIG. 3 may be performed by any suitable computer-executable code and/or computing system. In some embodiments, the steps shown in FIG. 3 may be performed by one or more of the components of system 100 in FIG. 1, system 200 in FIG. 2, computing system 510 in FIG. 5, and/or portions of representative network architecture 600 in FIG. 6.

As illustrated in FIG. 3, at step 302, one or more of the systems described herein may detect a security breach of an entity within a set of entities. For example, detection module 104 may, as part of computing device 202 in FIG. 2, detect security breach 212 of entity 210 within set of entities 208.

Detection module 104 may detect security breach 212 in a variety of ways. In some examples, detection module 104 may detect security breach 212 by detecting unauthorized access to entity 210. In other examples, detection module 104 may receive an alert from entity 210 indicating security breach 212. Additionally or alternatively, in further examples, detection module 104 may identify a security report indicating security breach 212. In these examples, the security report may include a news report on a breach, such as a data breach, that affects entity 210. The security report may alternatively include a report directly from entity 210 about security breach 212. Additionally, detection module 104 may pull the security report from another source or compile it from multiple sources.

Returning to FIG. 3, at step 304, one or more of the systems described herein may construct a peer-similarity graph that identifies an incentive to attack the entity in comparison to other entities within the set of entities. For example, construction module 106 may, as part of computing device 202 in FIG. 2, construct peer-similarity graph 214 that identifies an incentive to attack entity 210 in comparison to other entities within set of entities 208.

Construction module 106 may construct peer-similarity graph 214 in a variety of ways. In one embodiment, construction module 106 may construct peer-similarity graph 214 by creating a node for each entity in set of entities 208, creating an undirected edge between each pair of similar entities, and creating a directed edge between each pair of entities in a provider-client relationship. In this embodiment, undirected edges between two entities may be weighted based on the similarity between the entities, such that two highly similar entities have a stronger connection than two entities that are less similar. Likewise, a directed edge between a provider entity and a client entity may be weighted based on the closeness of the provider-client relationship, and the direction of the edge may indicate which entity is the provider and which entity is the client.

Additionally, in the above embodiment, construction module 106 may determine a size of the node by evaluating the incentive to attack entity 210 and adjusting the size of the node based on entities connected to entity 210 by edges. In this embodiment, construction module 106 may evaluate the incentive to attack entity 210 by identifying a market of entity 210, a size of entity 210, a value of entity 210, or a number of clients of entity 210. Furthermore, the size of entity 210 may be measured by a physical size of an organization, a number of employees, a production volume, total assets, or any other suitable metric for determining comparative size. For example, attackers may have more incentive to attack larger, high-value entities, in particular industries. Construction module 106 may also evaluate the incentive to attack entity 210 based on a type of data stored by entity 210, a security measure used by entity 210, and/or a reputation of entity 210 such as a brand reputation of an organization. In this example, attackers may have more incentive to attack an entity that stores financial data but has few security measures.

In the above embodiment, construction module 106 may then adjust the size of the node by calculating an average node size of similar entities to entity 210, weighting the size of the node based on an aggregate node size of provider entities of entity 210, and/or weighting the size of the node based on an aggregate node size of client entities of entity 210. For example, an entity may have a larger node if similar peer entities have a high risk of attack. An entity may also have a large node if attackers have a high incentive to attack its clients and/or providers.

For example, as shown in FIG. 4, construction module 106 may construct peer-similarity graph 214 for entities 210(1), 210(2), 210(3), 210(4), and 210(5). In this example, entity 210 (1) may be a large organization of high value that is a provider for entities 210(3), 210(4), and 210(5). Thus, entity 210(1) may have a larger node in comparison to the other entities, partly weighted by the node sizes of its clients. Entity 210(2) may be a provider similar to entity 210(1) but may have a smaller node due to a smaller organizational size and fewer clients. In contrast, peer entities 210(3) and 210(4) may be highly similar in size, value, and provider and may have similar node sizes. Furthermore, due to their high similarity, entity 210(3) and entity 210(4) may have a heavier weighted edge connecting them compared to the edge between entity 210(1) and entity 210(2).

Returning to FIG. 3, at step 306, one or more of the systems described herein may create, using the peer-similarity graph, a security risk profile for each entity in the set of entities. For example, creation module 108 may, as part of computing device 202 in FIG. 2, create, using peer-similarity graph 214, security risk profile 122 for each entity 210 in set of entities 208.

Creation module 108 may create security risk profile 122 in a variety of ways. In some examples, creation module 108 may create security risk profile 122 by calculating a risk score based on peer-similarity graph 214 and weighting the risk score with historical security risk data, such as historical risk data 124, of entity 210 and similar entities. In the example of FIG. 4, security risk profile 122 for entity 210(3) may include a low risk score based on the size of the node. The low risk score may then be modified to account for historical risk data 124 of entity 210(3). For example, if entity 210(3) has not had prior security breaches, security risk profile 122 may include an even lower risk score. In this example, security risk profile 122 may also consider historical security risk for entity 210(4), as a peer entity with similar risks, such that prior attacks on entity 210(4) could indicate increased risk of attack for entity 210(3) and, therefore, increase the risk score.

Returning to FIG. 3, at step 308, one or more of the systems described herein may automatically adjust at least one security risk profile based on the detected security breach. For example, adjustment module 110 may, as part of computing device 202 in FIG. 2, automatically adjust security risk profile 122 based on detected security breach 212.

Adjustment module 110 may adjust security risk profile 122 in a variety of ways. In some embodiments, adjustment module 110 may adjust security risk profile 122 by adjusting the risk score of breached entity 210. Adjustment module 110 may also adjust the risk score of a related entity and/or add security breach 212 to historical risk data 124. In the example of FIG. 4, a breach to entity 210(3) may trigger adjustment module 110 to adjust security risk profile 122 by increasing the risk score of entity 210(3). Additionally, adjustment module 110 may adjust the security risk scores in the security risk profiles of entity 210(4) as a peer of entity 210(3) and/or entity 210(1) as a provider of entity 210(3). Adjustment module 110 may then update historical risk data 124 with information about security breach 212.

Returning to FIG. 3, at step 310, one or more of the systems described herein may update a security database with the adjusted security risk profile. For example, update module 112 may, as part of computing device 202 in FIG. 2, update database 120 with the adjusted security risk profile 122.

Update module 112 may update database 120 in a variety of ways. In the example of FIG. 2, all security risk profiles for set of entities 208 may be stored in database 120, and update module 112 may update security risk profile 122 for entity 210 with a new adjusted profile. Update module 112 may alternatively store the adjusted security risk profile in database 120 or a separate security database without replacing the previous iteration.

In some embodiments, the systems described herein may further include generating risk evaluation report 216 of entity 210 using the security database, such as database 120. In these embodiments, risk evaluation report 216 may include a record of security breaches, security risk profile 122 of entity 210, and/or an evaluation of risk of similar entities. For example, a risk evaluation report for entity 210(1) in FIG. 4 may include the security risk profile of entity 210(1) as well as a record of security breaches of all related entities in peer-similarity graph 214. A risk evaluation report for entity 210(3) may include a risk profile for entity 210(3) as well as an evaluation of entity 210(4). In these embodiments, risk evaluation report 216 may then be output and used in various financial and/or security decision making processes, such as in calculating insurance cost.

In some examples, the systems described herein may further include determining that security risk profile 122 indicates a high security threat to entity 210 and, in response to the determination, performing a security action to mitigate the threat. The security action may include alerting an administrator, such as an administrator of computing device 202 or an administrator of entity 210, of the high security threat. For example, the systems described herein may send an alert to entity 210 and/or similar entities about security breach 212. Additionally or alternatively, the security action may include flagging entity 210 as a high risk. Furthermore, the security action may include sending a security report to entity 210. For example, the security report may detail risks associated with entity 210 and/or ways to counter security breach 212.

As explained above in connection with method 300 in FIG. 3, the disclosed systems and methods may, by comparing similar entities rather than investigating a single entity, determine a risk of attack based on incentives to attack any one entity within a group. Specifically, the disclosed systems and methods may first construct a similarity graph using various known attributes of the entities to compare incentives. For example, the systems and methods described herein may use organizational size and brand reputation to compare the likelihood of an attack being levied against one entity versus another.

The disclosed systems and methods may also determine the incentive for attacking an entity by evaluating the risk of client or provider entities connected to the first entity. Additionally, the disclosed systems and methods may adjust the evaluation of risk based on a security history, such as whether the entity has experience previous security breaches and whether similar entities have been attacked. Furthermore, as new breaches and attacks are discovered, the disclosed systems and methods may continue to adjust the security risk profiles of the group of entities to account for the additional risk data. Finally, the systems and methods described herein may use security risk profiles to generate risk evaluation reports for each of the entities.

As detailed above, by considering relative incentive to attack an entity, the disclosed systems and methods may more accurately evaluate the security risk of the entity. In addition, by including historical data of similar entities, the disclosed systems and methods may create risk profiles that capture comparative security risk over time. Thus, the systems and methods described herein may improve risk evaluation without fully relying on information about security measures.

FIG. 5 is a block diagram of a representative computing system 510 capable of implementing one or more of the embodiments described and/or illustrated herein. For example, all or a portion of computing system 510 may perform and/or be a means for performing, either alone or in combination with other elements, one or more of the steps described herein (such as one or more of the steps illustrated in FIG. 3). All or a portion of computing system 510 may also perform and/or be a means for performing any other steps, methods, or processes described and/or illustrated herein.

Computing system 510 broadly represents any single or multi-processor computing device or system capable of executing computer-readable instructions. Examples of computing system 510 include, without limitation, workstations, laptops, client-side terminals, servers, distributed computing systems, handheld devices, or any other computing system or device. In its most basic configuration, computing system 510 may include at least one processor 514 and a system memory 516.

Processor 514 generally represents any type or form of physical processing unit (e.g., a hardware-implemented central processing unit) capable of processing data or interpreting and executing instructions. In certain embodiments, processor 514 may receive instructions from a software application or module. These instructions may cause processor 514 to perform the functions of one or more of the representative embodiments described and/or illustrated herein.

System memory 516 generally represents any type or form of volatile or non-volatile storage device or medium capable of storing data and/or other computer-readable instructions. Examples of system memory 516 include, without limitation, Random Access Memory (RAM), Read Only Memory (ROM), flash memory, or any other suitable memory device. Although not required, in certain embodiments computing system 510 may include both a volatile memory unit (such as, for example, system memory 516) and a non-volatile storage device (such as, for example, primary storage device 532, as described in detail below). In one example, one or more of modules 102 from FIG. 1 may be loaded into system memory 516.

In certain embodiments, representative computing system 510 may also include one or more components or elements in addition to processor 514 and system memory 516. For example, as illustrated in FIG. 5, computing system 510 may include a memory controller 518, an Input/Output (I/O) controller 520, and a communication interface 522, each of which may be interconnected via a communication infrastructure 512. Communication infrastructure 512 generally represents any type or form of infrastructure capable of facilitating communication between one or more components of a computing device. Examples of communication infrastructure 512 include, without limitation, a communication bus (such as an Industry Standard Architecture (ISA), Peripheral Component Interconnect (PCI), PCI Express (PCIe), or similar bus) and a network.

Memory controller 518 generally represents any type or form of device capable of handling memory or data or controlling communication between one or more components of computing system 510. For example, in certain embodiments memory controller 518 may control communication between processor 514, system memory 516, and I/O controller 520 via communication infrastructure 512.

I/O controller 520 generally represents any type or form of module capable of coordinating and/or controlling the input and output functions of a computing device. For example, in certain embodiments I/O controller 520 may control or facilitate transfer of data between one or more elements of computing system 510, such as processor 514, system memory 516, communication interface 522, display adapter 526, input interface 530, and storage interface 534.

Communication interface 522 broadly represents any type or form of communication device or adapter capable of facilitating communication between representative computing system 510 and one or more additional devices. For example, in certain embodiments communication interface 522 may facilitate communication between computing system 510 and a private or public network including additional computing systems. Examples of communication interface 522 include, without limitation, a wired network interface (such as a network interface card), a wireless network interface (such as a wireless network interface card), a modem, and any other suitable interface. In at least one embodiment, communication interface 522 may provide a direct connection to a remote server via a direct link to a network, such as the Internet. Communication interface 522 may also indirectly provide such a connection through, for example, a local area network (such as an Ethernet network), a personal area network, a telephone or cable network, a cellular telephone connection, a satellite data connection, or any other suitable connection.

In certain embodiments, communication interface 522 may also represent a host adapter configured to facilitate communication between computing system 510 and one or more additional network or storage devices via an external bus or communications channel. Examples of host adapters include, without limitation, Small Computer System Interface (SCSI) host adapters, Universal Serial Bus (USB) host adapters, Institute of Electrical and Electronics Engineers (IEEE) 1394 host adapters, Advanced Technology Attachment (ATA), Parallel ATA (PATA), Serial ATA (SATA), and External SATA (eSATA) host adapters, Fibre Channel interface adapters, Ethernet adapters, or the like. Communication interface 522 may also allow computing system 510 to engage in distributed or remote computing. For example, communication interface 522 may receive instructions from a remote device or send instructions to a remote device for execution.

As illustrated in FIG. 5, computing system 510 may also include at least one display device 524 coupled to communication infrastructure 512 via a display adapter 526. Display device 524 generally represents any type or form of device capable of visually displaying information forwarded by display adapter 526. Similarly, display adapter 526 generally represents any type or form of device configured to forward graphics, text, and other data from communication infrastructure 512 (or from a frame buffer, as known in the art) for display on display device 524.

As illustrated in FIG. 5, representative computing system 510 may also include at least one input device 528 coupled to communication infrastructure 512 via an input interface 530. Input device 528 generally represents any type or form of input device capable of providing input, either computer or human generated, to representative computing system 510. Examples of input device 528 include, without limitation, a keyboard, a pointing device, a speech recognition device, or any other input device.

As illustrated in FIG. 5, representative computing system 510 may also include a primary storage device 532 and a backup storage device 533 coupled to communication infrastructure 512 via a storage interface 534. Storage devices 532 and 533 generally represent any type or form of storage device or medium capable of storing data and/or other computer-readable instructions. For example, storage devices 532 and 533 may be a magnetic disk drive (e.g., a so-called hard drive), a solid state drive, a floppy disk drive, a magnetic tape drive, an optical disk drive, a flash drive, or the like. Storage interface 534 generally represents any type or form of interface or device for transferring data between storage devices 532 and 533 and other components of computing system 510. In one example, database 120 from FIG. 1 may be stored in primary storage device 532.

In certain embodiments, storage devices 532 and 533 may be configured to read from and/or write to a removable storage unit configured to store computer software, data, or other computer-readable information. Examples of suitable removable storage units include, without limitation, a floppy disk, a magnetic tape, an optical disk, a flash memory device, or the like. Storage devices 532 and 533 may also include other similar structures or devices for allowing computer software, data, or other computer-readable instructions to be loaded into computing system 510. For example, storage devices 532 and 533 may be configured to read and write software, data, or other computer-readable information. Storage devices 532 and 533 may also be a part of computing system 510 or may be a separate device accessed through other interface systems.

Many other devices or subsystems may be connected to computing system 510. Conversely, all of the components and devices illustrated in FIG. 5 need not be present to practice the embodiments described and/or illustrated herein. The devices and subsystems referenced above may also be interconnected in different ways from that shown in FIG. 5. Computing system 510 may also employ any number of software, firmware, and/or hardware configurations. For example, one or more of the representative embodiments disclosed herein may be encoded as a computer program (also referred to as computer software, software applications, computer-readable instructions, or computer control logic) on a computer-readable medium. The phrase "computer-readable medium," as used herein, generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

The computer-readable medium containing the computer program may be loaded into computing system 510. All or a portion of the computer program stored on the computer-readable medium may then be stored in system memory 516 and/or various portions of storage devices 532 and 533. When executed by processor 514, a computer program loaded into computing system 510 may cause processor 514 to perform and/or be a means for performing the functions of one or more of the representative embodiments described and/or illustrated herein. Additionally or alternatively, one or more of the representative embodiments described and/or illustrated herein may be implemented in firmware and/or hardware. For example, computing system 510 may be configured as an Application Specific Integrated Circuit (ASIC) adapted to implement one or more of the representative embodiments disclosed herein.

FIG. 6 is a block diagram of a representative network architecture 600 in which client systems 610, 620, and 630 and servers 640 and 645 may be coupled to a network 650. As detailed above, all or a portion of network architecture 600 may perform and/or be a means for performing, either alone or in combination with other elements, one or more of the steps disclosed herein (such as one or more of the steps illustrated in FIG. 3). All or a portion of network architecture 600 may also be used to perform and/or be a means for performing other steps and features set forth in the instant disclosure.

Client systems 610, 620, and 630 generally represent any type or form of computing device or system, such as representative computing system 510 in FIG. 5. Similarly, servers 640 and 645 generally represent computing devices or systems, such as application servers or database servers, configured to provide various database services and/or run certain software applications. Network 650 generally represents any telecommunication or computer network including, for example, an intranet, a WAN, a LAN, a PAN, or the Internet. In one example, client systems 610, 620, and/or 630 and/or servers 640 and/or 645 may include all or a portion of system 100 from FIG. 1.

As illustrated in FIG. 6, one or more storage devices 660(1)-(N) may be directly attached to server 640. Similarly, one or more storage devices 670(1)-(N) may be directly attached to server 645. Storage devices 660(1)-(N) and storage devices 670(1)-(N) generally represent any type or form of storage device or medium capable of storing data and/or other computer-readable instructions. In certain embodiments, storage devices 660(1)-(N) and storage devices 670(1)-(N) may represent Network-Attached Storage (NAS) devices configured to communicate with servers 640 and 645 using various protocols, such as Network File System (NFS), Server Message Block (SMB), or Common Internet File System (CIFS).

Servers 640 and 645 may also be connected to a Storage Area Network (SAN) fabric 680. SAN fabric 680 generally represents any type or form of computer network or architecture capable of facilitating communication between a plurality of storage devices. SAN fabric 680 may facilitate communication between servers 640 and 645 and a plurality of storage devices 690(1)-(N) and/or an intelligent storage array 695. SAN fabric 680 may also facilitate, via network 650 and servers 640 and 645, communication between client systems 610, 620, and 630 and storage devices 690(1)-(N) and/or intelligent storage array 695 in such a manner that devices 690(1)-(N) and array 695 appear as locally attached devices to client systems 610, 620, and 630. As with storage devices 660(1)-(N) and storage devices 670(1)-(N), storage devices 690(1)-(N) and intelligent storage array 695 generally represent any type or form of storage device or medium capable of storing data and/or other computer-readable instructions.

In certain embodiments, and with reference to representative computing system 510 of FIG. 5, a communication interface, such as communication interface 522 in FIG. 5, may be used to provide connectivity between each client system 610, 620, and 630 and network 650. Client systems 610, 620, and 630 may be able to access information on server 640 or 645 using, for example, a web browser or other client software. Such software may allow client systems 610, 620, and 630 to access data hosted by server 640, server 645, storage devices 660(1)-(N), storage devices 670(1)-(N), storage devices 690(1)-(N), or intelligent storage array 695. Although FIG. 6 depicts the use of a network (such as the Internet) for exchanging data, the embodiments described and/or illustrated herein are not limited to the Internet or any particular network-based environment.

In at least one embodiment, all or a portion of one or more of the representative embodiments disclosed herein may be encoded as a computer program and loaded onto and executed by server 640, server 645, storage devices 660(1)-(N), storage devices 670(1)-(N), storage devices 690(1)-(N), intelligent storage array 695, or any combination thereof. All or a portion of one or more of the representative embodiments disclosed herein may also be encoded as a computer program, stored in server 640, run by server 645, and distributed to client systems 610, 620, and 630 over network 650.

As detailed above, computing system 510 and/or one or more components of network architecture 600 may perform and/or be a means for performing, either alone or in combination with other elements, one or more steps of a representative method for determining security risk profiles.

While the foregoing disclosure sets forth various embodiments using specific block diagrams, flowcharts, and examples, each block diagram component, flowchart step, operation, and/or component described and/or illustrated herein may be implemented, individually and/or collectively, using a wide range of hardware, software, or firmware (or any combination thereof) configurations. In addition, any disclosure of components contained within other components should be considered representative in nature since many other architectures can be implemented to achieve the same functionality.

In some examples, all or a portion of representative system 100 in FIG. 1 may represent portions of a cloud-computing or network-based environment. Cloud-computing environments may provide various services and applications via the Internet. These cloud-based services (e.g., software as a service, platform as a service, infrastructure as a service, etc.) may be accessible through a web browser or other remote interface. Various functions described herein may be provided through a remote desktop environment or any other cloud-based computing environment.

In various embodiments, all or a portion of representative system 100 in FIG. 1 may facilitate multi-tenancy within a cloud-based computing environment. In other words, the software modules described herein may configure a computing system (e.g., a server) to facilitate multi-tenancy for one or more of the functions described herein. For example, one or more of the software modules described herein may program a server to enable two or more clients (e.g., customers) to share an application that is running on the server. A server programmed in this manner may share an application, operating system, processing system, and/or storage system among multiple customers (i.e., tenants). One or more of the modules described herein may also partition data and/or configuration information of a multi-tenant application for each customer such that one customer cannot access data and/or configuration information of another customer.

According to various embodiments, all or a portion of representative system 1 00 in FIG. 1 may be implemented within a virtual environment. For example, the modules and/or data described herein may reside and/or execute within a virtual machine. As used herein, the phrase "virtual machine" generally refers to any operating system environment that is abstracted from computing hardware by a virtual machine manager (e.g., a hypervisor). Additionally or alternatively, the modules and/or data described herein may reside and/or execute within a virtualization layer. As used herein, the phrase "virtualization layer" generally refers to any data layer and/or application layer that overlays and/or is abstracted from an operating system environment. A virtualization layer may be managed by a software virtualization solution (e.g., a file system filter) that presents the virtualization layer as though it were part of an underlying base operating system. For example, a software virtualization solution may redirect calls that are initially directed to locations within a base file system and/or registry to locations within a virtualization layer.

In some examples, all or a portion of representative system 100 in FIG. 1 may represent portions of a mobile computing environment. Mobile computing environments may be implemented by a wide range of mobile computing devices, including mobile phones, tablet computers, e-book readers, personal digital assistants, wearable computing devices (e.g., computing devices with a head-mounted display, smartwatches, etc.), and the like. In some examples, mobile computing environments may have one or more distinct features, including, for example, reliance on battery power, presenting only one foreground application at any given time, remote management features, touchscreen features, location and movement data (e.g., provided by Global Positioning Systems, gyroscopes, accelerometers, etc.), restricted platforms that restrict modifications to system-level configurations and/or that limit the ability of third-party software to inspect the behavior of other applications, controls to restrict the installation of applications (e.g., to only originate from approved application stores), etc. Various functions described herein may be provided for a mobile computing environment and/or may interact with a mobile computing environment.

In addition, all or a portion of representative system 100 in FIG. 1 may represent portions of, interact with, consume data produced by, and/or produce data consumed by one or more systems for information management. As used herein, the phrase "information management" may refer to the protection, organization, and/or storage of data. Examples of systems for information management may include, without limitation, storage systems, backup systems, archival systems, replication systems, high availability systems, data search systems, virtualization systems, and the like.

In some embodiments, all or a portion of representative system 100 in FIG. 1 may represent portions of, produce data protected by, and/or communicate with one or more systems for information security. As used herein, the phrase "information security" may refer to the control of access to protected data. Examples of systems for information security may include, without limitation, systems providing managed security services, data loss prevention systems, identity authentication systems, access control systems, encryption systems, policy compliance systems, intrusion detection and prevention systems, electronic discovery systems, and the like.

According to some examples, all or a portion of representative system 100 in FIG. 1 may represent portions of, communicate with, and/or receive protection from one or more systems for endpoint security. As used herein, the phrase "endpoint security" may refer to the protection of endpoint systems from unauthorized and/or illegitimate use, access, and/or control. Examples of systems for endpoint protection may include, without limitation, anti-malware systems, user authentication systems, encryption systems, privacy systems, spam-filtering services, and the like.

The process parameters and sequence of steps described and/or illustrated herein are given by way of example only and can be varied as desired. For example, while the steps illustrated and/or described herein may be shown or discussed in a particular order, these steps do not necessarily need to be performed in the order illustrated or discussed. The various representative methods described and/or illustrated herein may also omit one or more of the steps described or illustrated herein or include additional steps in addition to those disclosed.

While various embodiments have been described and/or illustrated herein in the context of fully functional computing systems, one or more of these representative embodiments may be distributed as a program product in a variety of forms, regardless of the particular type of computer-readable media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the representative embodiments disclosed herein.

In addition, one or more of the modules described herein may transform data, physical devices, and/or representations of physical devices from one form to another. For example, one or more of the modules recited herein may receive a security risk profile to be transformed, transform the security risk profile, output a result of the transformation to a storage or output device, use the result of the transformation to create a risk evaluation report, and store the result of the transformation in a server or database. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

The preceding description has been provided to enable others skilled in the art to best utilize various aspects of the representative embodiments disclosed herein. This representative description is not intended to be exhaustive or to be limited to any precise form disclosed. Many modifications and variations are possible without departing from the scope of the instant disclosure. The embodiments disclosed herein should be considered in all respects illustrative and not restrictive. Reference should be made to the appended claims in determining the scope of the instant disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. A computer-implemented method for determining security risk profiles, at least a portion of the method being performed by a computing device (202) comprising at least one processor, the method comprising:
detecting a security breach (212) of an entity (210) within a set of entities (208);
constructing a peer-similarity graph (214) that identifies an incentive to attack the entity (210) in comparison to other entities within the set of entities (208);
creating, using the peer-similarity graph (214), a security risk profile (122) for each entity in the set of entities (208);
automatically adjusting, based on the detected security breach (212) and the peer-similarity graph (214), at least one security risk profile (122) for:
the entity (210); and
a related entity;
updating a security database (120) with the adjusted security risk profile (122);
wherein constructing the peer-similarity graph (214) comprises
creating a node for each entity in the set of entities (208),
creating an undirected edge between each pair of similar entities,
creating a directed edge between each pair of entities in a provider-client relationship;
wherein creating the node comprises
determining a size of the node by evaluating the incentive to attack the entity, and
adjusting the size of the node based on entities connected by edges.

2. The method of claim 1, wherein detecting the security breach comprises at least one of:
detecting unauthorized access to the entity (210);
receiving an alert from the entity (210);
identifying a security report indicating the security breach (212).

3. The method of claim 1 or 2, wherein evaluating the incentive to attack the entity (210) comprises identifying at least one of:
a market of the entity;
a size of the entity;
a value of the entity;
a number of clients of the entity;
a type of data stored by the entity;
a security measure used by the entity;
a reputation of the entity.

4. The method of anyone of claims 1 to 3, wherein adjusting the size of the node comprises at least one of:
calculating an average node size of similar entities;
weighting the size of the node based on an aggregate node size of provider entities;
weighting the size of the node based on an aggregate node size of client entities.

5. The method of any one of claims 1 to 4, wherein creating the security risk profile comprises:
calculating a risk score based on the peer-similarity graph (214);
weighting the risk score with historical risk data of the entity and similar entities.

6. The method of claim 5, wherein adjusting the security risk profile (122) comprises at least one of:
adjusting the risk score of the breached entity (210);
adjusting the risk score of a related entity;
adding the security breach (212) to the historical risk data.

7. The method of any one of claims 1 to 6, further comprising generating a risk evaluation report of the entity using the security database (120).

8. The method of claim 7, wherein the risk evaluation report comprises at least one of:
a record of security breaches;
the security risk profile of the entity;
an evaluation of risk of similar entities.

9. The method of any one of claims 1 to 8, further comprising determining that the security risk profile (122) indicates a high security threat to the entity and, in response, performing a security action to mitigate the threat.

10. The method of claim 9, wherein the security action comprises at least one of:
alerting an administrator of the security breach (212);
flagging the entity as a high risk;
sending a security report to the entity (210).

11. A system for determining security risk profiles, the system comprising:
a means for detecting a security breach (212) of an entity (210) within a set of entities (208);
a means for constructing a peer-similarity graph (214) that identifies an incentive to attack the entity (210) in comparison to other entities within the set of entities (208);
a means for creating, using the peer-similarity graph (214), a security risk profile (122) for each entity in the set of entities (208);
a means for adjusting, automatically based on the detected security breach (212) and the peer-similarity graph (214), at least one security risk profile (122) for:
the entity (210); and
a related entity;
a means for updating a security database (120) with the adjusted security risk profile (122);
at least one processor that executes the means for detecting, the means for constructing, the means for creating, the means for adjusting, and the means for updating;
wherein constructing the peer-similarity graph (214) comprises
creating a node for each entity in the set of entities (208),
creating an undirected edge between each pair of similar entities,
creating a directed edge between each pair of entities in a provider-client relationship;
wherein creating the node comprises
determining a size of the node by evaluating the incentive to attack the entity, and
adjusting the size of the node based on entities connected by edges.

12. The system of claim 11, further comprising generating a risk evaluation report of the entity using the security database (120).

13. A non-transitory computer-readable medium comprising one or more computer-executable instructions that, when executed by at least one processor of a computing device (202), cause the computing device (202) to:
detect a security breach (212) of an entity (210) within a set of entities (208);
construct a peer-similarity graph (214) that identifies an incentive to attack the entity (210) in comparison to other entities within the set of entities (208);
create, using the peer-similarity graph (214), a security risk profile (122) for each entity in the set of entities (208);
automatically adjust, based on the detected security breach (212) and the peer-similarity graph (214), at least one security risk profile for:
the entity (210); and
a related entity;
update a security database (120) with the adjusted security risk profile (122);
wherein constructing the peer-similarity graph (214) comprises
creating a node for each entity in the set of entities (208),
creating an undirected edge between each pair of similar entities,
creating a directed edge between each pair of entities in a provider-client relationship;
wherein creating the node comprises
determining a size of the node by evaluating the incentive to attack the entity, and
adjusting the size of the node based on entities connected by edges.

## Patentansprüche

1. Ein computerimplementiertes Verfahren zum Bestimmen von Sicherheitsrisikoprofilen, wobei zumindest ein Abschnitt des Verfahrens mittels einer Rechenvorrichtung (202) ausgeführt wird, welche mindestens einen Prozessor aufweist, das Verfahren aufweisend:
Detektieren einer Sicherheitslücke (212) einer Entität (210) in einem Satz von Entitäten (208);
Konstruieren eines Peer-Ähnlichkeitsgraphen (214), welcher einen Anreiz identifiziert, die Entität (210) anzugreifen, im Vergleich mit anderen Entitäten in dem Satz von Entitäten (208);
Erzeugen, unter Verwendung des Peer-Ähnlichkeitsgraphen (214), eines Sicherheitsrisikoprofils (122) für jede Entität in dem Satz von Entitäten (208);
automatisches Einstellen, basierend auf der detektierten Sicherheitslücke (212) und dem Peer-Ähnlichkeitsgraphen (214), mindestens eines Sicherheitsrisikoprofils (122) für:
die Entität (210); und
eine verwandte Entität;
Updaten einer Sicherheitsdatenbank (120) mit dem eingestellten Sicherheitsrisikoprofil (122);
wobei das Konstruieren des Peer-Ähnlichkeitsgraphen (214) aufweist
Erzeugen eines Knotens für jede Entität in dem Satz von Entitäten (208),
Erzeugen eines ungerichteten Randes zwischen jedem Paar von ähnlichen Entitäten,
Erzeugen eines gerichteten Randes zwischen jedem Paar von Entitäten in einer Provider-Client Beziehung;
wobei das Erzeugen des Knotens aufweist
Bestimmen einer Größe des Knotens mittels Evaluierens des Anreizes, die Entität anzugreifen, und
Einstellen der Größe des Knotens basierend auf den Entitäten, welche mittels der Ränder verbunden sind.

2. Das Verfahren gemäß Anspruch 1, wobei das Detektieren der Sicherheitslücke mindestens eines aufweist von:
Detektieren eines nicht autorisierten Zugriffs auf die Entität (210);
Empfangen eines Alarms von der Entität (210);
Identifizieren eines Sicherheitsberichts, welcher die Sicherheitslücke (212) angibt.

3. Das Verfahren gemäß Anspruch 1 oder 2, wobei das Evaluieren des Anreizes, die Entität (210) anzugreifen, aufweist
Identifizieren von mindestens einem von:
einem Markt der Entität;
einer Größe der Entität;
einem Wert der Entität;
einer Anzahl von Clients der Entität;
einem Typ von Daten, welche von der Entität gespeichert werden;
einer Sicherheitsmaßnahme, welche von der Entität verwendet wird;
einer Reputation der Entität.

4. Das Verfahren gemäß einem beliebigen der Ansprüche 1 bis 3, wobei das Einstellen der Größe des Knotens mindestens eines aufweist von:
Berechnen einer durchschnittlichen Knotengröße ähnlicher Entitäten;
Gewichten der Größe des Knotens basierend auf einer Aggregatsknotengröße von Provider Entitäten;
Gewichten der Größe des Knotens basierend auf einer Aggregatsknotengröße von Client Entitäten.

5. Das Verfahren gemäß einem beliebigen der Ansprüche 1 bis 4, wobei das Erzeugen des Sicherheitsrisikoprofils aufweist:
Berechnen eines Risikoscores basierend auf dem Peer-Ähnlichkeitsgraphen (214);
Gewichten des Risikoscores mit historischen Risikodaten der Entität und ähnlichen Entitäten.

6. Das Verfahren gemäß Anspruch 5, wobei das Einstellen des Sicherheitsrisikoprofils (122) mindestens eines aufweist von:
Einstellen des Risikoscores der mit der Lücke versehenen Entität (210);
Einstellen des Risikoscores einer verwandten Entität;
Hinzufügen der Sicherheitslücke (212) zu den historischen Risikodaten.

7. Das Verfahren gemäß einem beliebigen der Ansprüche 1 bis 6, ferner aufweisend das Erzeugen eines Risiko-Evaluationsberichts der Entität unter Verwendung der Sicherheitsdatenbank (120).

8. Das Verfahren gemäß Anspruch 7, wobei der Risiko-Evaluationsbericht mindestens eines aufweist von:
einem Bericht der Sicherheitslücken;
dem Sicherheitsrisikoprofil der Entität;
einer Evaluation des Risikos ähnlicher Entitäten.

9. Das Verfahren gemäß einem beliebigen der Ansprüche 1 bis 8, ferner aufweisend das Bestimmen, dass das Sicherheitsrisikoprofil (122) eine hohe Sicherheitsgefährdung für die Entität angibt, und als Reaktion, Ausführen einer Sicherheitsmaßnahme, um die Gefährdung einzudämmen.

10. Das Verfahren gemäß Anspruch 9, wobei die Sicherheitsmaßnahme mindestens eines aufweist von:
Alarmieren eines Administrators der Sicherheitslücke (212);
Flagging der Entität als ein hohes Risiko;
Senden eines Sicherheitsberichts zu der Entität (210).

11. Ein System zum Bestimmen von Sicherheitsrisikoprofilen, das System aufweisend:
ein Mittel zum Detektieren einer Sicherheitslücke (212) einer Entität (210) in einem Satz von Entitäten (208);
ein Mittel zum Konstruieren eines Peer-Ähnlichkeitsgraphen (214), welcher einen Anreiz identifiziert, die Entität (210) anzugreifen, im Vergleich mit anderen Entitäten in dem Satz von Entitäten (208);
ein Mittel zum Erzeugen, unter Verwendung des Peer-Ähnlichkeitsgraphen (214), eines Sicherheitsrisikoprofils (122) für jede Entität in dem Satz von Entitäten (208);
ein Mittel zum Einstellen, automatisch basierend auf der detektierten Sicherheitslücke (212) und dem Peer-Ähnlichkeitsgraphen (214), mindestens eines Sicherheitsrisikoprofils (122) für:
die Entität (210); und
eine verwandte Entität;
ein Mittel zum Updaten einer Sicherheitsdatenbank (120) mit dem eingestellten Sicherheitsrisikoprofil (122);
mindestens ein Prozessor, welcher das Mittel zum Detektieren, das Mittel zum Konstruieren, das Mittel zum Erzeugen, das Mittel zum Einstellen, und das Mittel zum Updaten ausführt;
wobei das Konstruieren des Peer-Ähnlichkeitsgraphen (214) aufweist
Erzeugen eines Knotens für jede Entität in dem Satz von Entitäten (208),
Erzeugen eines ungerichteten Randes zwischen jedem Paar von ähnlichen Entitäten,
Erzeugen eines gerichteten Randes zwischen jedem Paar von Entitäten in einer Provider-Client Beziehung;
wobei das Erzeugen des Knotens aufweist
Bestimmen einer Größe des Knotens mittels Evaluierens des Anreizes, die Entität anzugreifen, und
Einstellen der Größe des Knotens basierend auf den Entitäten, welche mittels der Ränder verbunden sind.

12. Das System gemäß Anspruch 11, ferner aufweisend Erzeugen eines Risiko-Evaluationsberichts der Entität unter Verwendung der Sicherheitsdatenbank (120).

13. Ein nicht transitorisches computerlesbares Medium aufweisend eine oder mehrere computerausführbare Anweisungen, welche, wenn sie mittels mindestens eines Prozessors einer Rechenvorrichtung (202) ausgeführt werden, die Rechenvorrichtung (202) veranlassen zum:
Detektieren einer Sicherheitslücke (212) einer Entität (210) in einem Satz von Entitäten (208);
Konstruieren eines Peer-Ähnlichkeitsgraphen (214), welcher einen Anreiz identifiziert, die Entität (210) anzugreifen, im Vergleich mit anderen Entitäten in dem Satz von Entitäten (208);
Erzeugen, unter Verwendung des Peer-Ähnlichkeitsgraphen (214), eines Sicherheitsrisikoprofils (122) für jede Entität in dem Satz von Entitäten (208);
automatischen Einstellen, basierend auf der detektierten Sicherheitslücke (212) und dem Peer-Ähnlichkeitsgraphen (214), mindestens eines Sicherheitsrisikoprofils für:
die Entität (210); und
eine verwandte Entität;
Updaten einer Sicherheitsdatenbank (120) mit dem eingestellten Sicherheitsrisikoprofil (122);
wobei das Konstruieren des Peer-Ähnlichkeitsgraphen (214) aufweist
Erzeugen eines Knotens für jede Entität in dem Satz von Entitäten (208),
Erzeugen eines ungerichteten Randes zwischen jedem Paar von ähnlichen Entitäten,
Erzeugen eines gerichteten Randes zwischen jedem Paar von Entitäten in einer Provider-Client Beziehung;
wobei das Erzeugen der Knoten aufweist
Bestimmen einer Größe des Knotens mittels Evaluierens des Anreizes, die Entität anzugreifen, und
Einstellen der Größe des Knotens basierend auf den Entitäten, welche mittels der Ränder verbunden sind.

## Revendications

1. Procédé implanté par ordinateur pour déterminer des profils de risque de sécurité, au moins une partie du procédé étant exécutée par un dispositif informatique (202) comprenant au moins un processeur, le procédé comprenant les étapes consistant à :
détecter une brèche de sécurité (212) d'une entité (210) au sein d'un ensemble d'entités (208) ;
construire un graphique de similitude entre pairs (214) qui identifie une incitation à attaquer l'entité (210) par rapport à d'autres entités au sein de l'ensemble d'entités (208) ;
créer, en utilisant le graphique de similitude entre pairs (214), un profil de risque de sécurité (122) pour chaque entité de l'ensemble d'entités (208) ;
ajuster automatiquement, sur la base de la brèche de sécurité détectée (212) et du graphique de similitude entre pairs (214), au moins un profil de risque de sécurité (122) pour :
l'entité (210) ; et
une entité liée ;
mettre à jour une base de données de sécurité (120) avec le profil de risque de sécurité ajusté (122) ;
dans lequel la construction du graphique de similitude entre pairs (214) comprend
la création d'un noeud pour chaque entité de l'ensemble d'entités (208),
la création d'une arête non dirigée entre chaque paire d'entités similaires,
la création d'une arête dirigée entre chaque paire d'entités dans une relation client-fournisseur ;
dans lequel la création du noeud comprend
la détermination d'une taille du noeud en évaluant l'incitation à attaquer l'entité, et
l'ajustement de la taille du noeud en fonction des entités reliées par des arêtes.

2. Procédé selon la revendication 1, dans lequel la détection de la brèche de sécurité comprend au moins l'une des étapes suivantes consistant à :
détecter un accès non autorisé à l'entité (210) ;
recevoir une alerte depuis l'entité (210) ;
identifier un rapport de sécurité indiquant la brèche de sécurité (212).

3. Procédé selon la revendication 1 ou 2, dans lequel l'évaluation de l'incitation à attaquer l'entité (210) comprend l'identification d'au moins un parmi :
un marché de l'entité ;
une taille de l'entité ;
une valeur de l'entité ;
un nombre de clients de l'entité ;
un type de données stockées par l'entité ;
une mesure de sécurité utilisée par l'entité ;
une réputation de l'entité.

4. Procédé selon l'une quelconque des revendications 1 à 3, dans lequel l'ajustement de la taille du noeud comprend au moins l'une des étapes suivantes consistant à :
calculer une taille de noeud moyenne d'entités similaires ;
pondérer la taille du noeud sur la base d'une taille de noeud d'agrégat des entités fournisseurs ;
pondérer la taille du noeud en fonction d'une taille de noeud d'agrégat des entités clientes.

5. Procédé selon l'une quelconque des revendications 1 à 4, dans lequel la création du profil de risque de sécurité comprend les étapes consistant à :
calculer un score de risque sur la base du graphique de similitude entre pairs (214) ;
pondérer le score de risque avec des données de risque historiques de l'entité et d'entités similaires.

6. Procédé selon la revendication 5, dans lequel l'ajustement du profil de risque de sécurité (122) comprend au moins l'une des étapes suivantes consistant à :
ajuster le score de risque de l'entité à brèche (210) ;
ajuster le score de risque d'une entité liée ;
ajouter la brèche de sécurité (212) aux données de risque historiques.

7. Procédé selon l'une quelconque des revendications 1 à 6, comprenant en outre la génération d'un rapport d'évaluation des risques de l'entité en utilisant la base de données de sécurité (120).

8. Procédé selon la revendication 7, dans lequel le rapport d'évaluation des risques comprend au moins un parmi :
un enregistrement de brèches de sécurité ;
le profil de risque de sécurité de l'entité ;
une évaluation du risque d'entités similaires.

9. Procédé selon l'une quelconque des revendications 1 à 8, comprenant en outre la détermination que le profil de risque de sécurité (122) indique une menace de sécurité élevée pour l'entité et, en réponse, la réalisation d'une action de sécurité pour atténuer la menace.

10. Procédé selon la revendication 9, dans lequel l'action de sécurité comprend au moins l'une des étapes suivantes consistant à :
alerter un administrateur de la brèche de sécurité (212) ;
signaler l'entité comme présentant un risque élevé ;
envoyer un rapport de sécurité à l'entité (210).

11. Système pour déterminer des profils de risque de sécurité, le système comprenant :
des moyens pour détecter une brèche de sécurité (212) d'une entité (210) au sein d'un ensemble d'entités (208) ;
des moyens pour construire un graphique de similitude entre pairs (214) qui identifie une incitation à attaquer l'entité (210) par rapport à d'autres entités au sein de l'ensemble d'entités (208) ;
des moyens pour créer, en utilisant le graphique de similitude entre pairs (214), un profil de risque de sécurité (122) pour chaque entité de l'ensemble d'entités (208) ;
des moyens pour ajuster automatiquement, sur la base de la brèche de sécurité détectée (212) et du graphique de similitude entre pairs (214), au moins un profil de risque de sécurité (122) pour :
l'entité (210) ; et
une entité liée ;
des moyens pour mettre à jour une base de données de sécurité (120) avec le profil de risque de sécurité ajusté (122) ;
au moins un processeur qui exécute les moyens de détection, les moyens de construction, les moyens de création, les moyens d'ajustement et les moyens de mise à jour ;
dans lequel la construction du graphique de similitude entre pairs (214) comprend
la création d'un noeud pour chaque entité de l'ensemble d'entités (208),
la création d'une arête non dirigée entre chaque paire d'entités similaires,
la création d'une arête dirigée entre chaque paire d'entités dans une relation client-fournisseur ;
dans lequel la création du noeud comprend
la détermination d'une taille du noeud en évaluant l'incitation à attaquer l'entité, et
l'ajustement de la taille du noeud en fonction des entités reliées par des arêtes.

12. Système selon la revendication 11, comprenant en outre la génération d'un rapport d'évaluation des risques de l'entité en utilisant la base de données de sécurité (120).

13. Support lisible par ordinateur non transitoire comprenant une ou plusieurs instructions exécutables par ordinateur qui, lorsqu'elles sont exécutées par au moins un processeur d'un dispositif informatique (202), amènent le dispositif informatique (202) à :
détecter une brèche de sécurité (212) d'une entité (210) au sein d'un ensemble d'entités (208) ;
construire un graphique de similitude entre pairs (214) qui identifie une incitation à attaquer l'entité (210) par rapport à d'autres entités au sein de l'ensemble d'entités (208) ;
créer, en utilisant le graphique de similitude entre pairs (214), un profil de risque de sécurité (122) pour chaque entité de l'ensemble d'entités (208) ;
ajuster automatiquement, sur la base de la brèche de sécurité détectée (212) et du graphique de similitude entre pairs (214), au moins un profil de risque de sécurité (122) pour :
l'entité (210) ; et
une entité liée ;
mettre à jour une base de données de sécurité (120) avec le profil de risque de sécurité ajusté (122) ;
dans lequel la construction du graphique de similitude entre pairs (214) comprend
la création d'un noeud pour chaque entité de l'ensemble d'entités (208),
la création d'une arête non dirigée entre chaque paire d'entités similaires,
la création d'une arête dirigée entre chaque paire d'entités dans une relation client-fournisseur ;
dans lequel la création du noeud comprend
la détermination d'une taille du noeud en évaluant l'incitation à attaquer l'entité, et
l'ajustement de la taille du noeud en fonction des entités reliées par des arêtes.
